(19) **Europäisches Patentamt**
**European Patent Office**
**Office européen des brevets**

(11) **EP 2 074 173 B1**

(12) **EUROPEAN PATENT SPECIFICATION**

(45) Date of publication and mention
of the grant of the patent:
**10.02.2010 Bulletin 2010/06**

(51) Int Cl.:
**C08L 53/02** (2006.01)

(21) Application number: **07818388.6**

(86) International application number:
**PCT/EP2007/008303**

(22) Date of filing: **19.09.2007**

(87) International publication number:
**WO 2008/034642 (27.03.2008 Gazette 2008/13)**

(54) **ELASTIC FILM GRADE THERMOPLASTIC POLYMER COMPOSITIONS HAVING IMPROVED ELASTIC PERFORMANCE**

FÜR ELASTISCHE FOLIEN GEEIGNETE THERMOPLASTISCHE POLYMERZUSAMMENSETZUNGEN MIT VERBESSERTER ELASTISCHER LEISTUNGSFÄHIGKEIT

COMPOSITIONS DE POLYMÈRES THERMOPLASTIQUES DE QUALITÉ APPROPRIÉE POUR LA FORMATION D'UN FILM ÉLASTIQUE, PRÉSENTANT DES PROPRIÉTÉS ÉLASTIQUES AMÉLIORÉES

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **20.09.2006 EP 06120986**

(43) Date of publication of application:
**01.07.2009 Bulletin 2009/27**

(73) Proprietors:
• **Kraton Polymers U.S. LLC**
**Houston TX 77082 (US)**
• **Kraiburg Tpe Gmbh & Co. Kg**
**84478 Waldkraiburg (DE)**

(72) Inventors:
• **WICKEL, Holger**
**84478 Waldkraiburg (DE)**
• **DE GROOT, Hendrik**
**1030 BH Amsterdam (NL)**
• **BEITZEL, Markus**
**84478 Waldkraiburg (DE)**

(74) Representative: **Kortekaas, Marcel C.J.A.**
**Exter Polak & Charlouis B.V.**
**Postbus 3241**
**2280 GE Rijswijk (NL)**

(56) References cited:
**EP-A2- 0 254 346      US-A- 5 068 138**
**US-A1- 2004 220 323**

## Description

### Technical Field

The present invention relates to elastic film grade thermoplastic polymer compositions, more specifically to such compositions that are extruded as films.

### Background Art

Films are often made from polyethylene, polypropylene, PVC, EVA or EVOH. On the other hand, compounds based on hydrogenated styrenic block copolymers (HSBC) are able to compete with these materials on the basis of their soft touch and flexibility, even at low temperatures. Moreover, films made of compounds based on HSBC combine transparency with being free of objectionable softening agents. On the other hand, the requirements, and those in respect of hysteresis in particular, are tough and the choice of compounds based on HSBC's is limited. Moreover, to be able to compete with the aforementioned polymers, the compounds based on HSBC need to be relatively cheap.

Elastic film grade thermoplastic polymer compositions having improved elastomeric performance have been described in WO 01/19919. These compositions comprise (a) from 52 to 60 percent by weight of a block copolymer having at least two polystyrene end-blocks and a mid-block of a hydrogenated polymerized diene which has a vinyl content of 45 percent by weight or less, (b) from 13 to 22 percent by weight of polystyrene, and (c) from 19 to 28 percent by weight of oil, wherein (a) + (b) + (c) add up to 100 percent by weight. Preferred compositions are those wherein the block copolymer is a polystyrene-polybutadiene-polystyrene tri-block copolymer with a molecular weight between 80,000 and 110,000 and a polystyrene content 14 to 25 percent by weight, a polystyrene block number average molecular weight of 7,000 to 11,000 for each end-block, a butadiene block number average molecular weight of 70,000 and 90,000, and a vinyl content of 45 percent by weight or less where at least 90 percent of the butadiene double bonds are hydrogenated. The polystyrene (b) preferably has a molecular weight average of 150,000 to 400,000, and a melt index less than 20 grams/10 minutes (e.g., Chevron™ EA3000, which has a melt flow rate of 9.0 grams/10min at 200˚C/5kg). Compounds according to that invention have considerably better retained tension or load properties as well as better stress relaxation properties.

From US2004/0220323 a plasticized HSBC is known, which is blended with polypropylene and free of filler material. Such a coposition may be injection molded to form a nipple for feeding an infant, or a teething ring, or goggles for a diver, and the articles are sterilizable and recyclable. These compositions are not described as suitable for films meeting typical film requirements. Further, from US2002/0001707 a low stress relaxation elastomeric material is known, which comprises a block copolymer, at least one vinylarene resin and mineral oil. Films are made from hydrogenated block copolymers such as Kraton(r) and Septon(r) polymers, combined with a polystyrene and a mineral oil. Still, there is a demand for elastic film grade thermoplastic polymer compositions that meet typical film requirements and that are even less expensive than the compositions of either of these references.

In addition, there are formulated compounds based on styrene-ethylene/butylene-styrene block copolymers which exhibit excellent elasticity with low hysteresis set. Kraton® G-2832 is described in **Fact Sheet K0344**. KRATON® G-2832 polymer for film applications. Kraton Polymers, 2003. In the aforementioned fact sheet, the stress-strain, cyclic hysteresis, stress relaxation behaviour and capillary rheometry curves of extrusion cast Kraton G-2832 polymer film are shown.

Interestingly, although described as a comparative example in WO 01/19919, a composition is provided, comprising a (combination of) HSBC and Piccolastic™ D125 (from Hercules) that meets typical film requirements such as a modulus at 100% of no greater than 1.8 MPa, preferably less or equal to 1.5 MPa, a tensile strength of at least 9 MPa, preferably at least 10 MPa, and a deformation resistance after 150 cycles in a hysteresis test of less than 15%.

It has been the object of extensive research and ingenuity to find alternate compounds that are at least as good as those of WO 01/19919 and/or at least as good as Kraton G-2832. This problem has now been solved with compounds based on readily available, relatively cheap components.

### Disclosure of Invention

The present invention is an improved block copolymer composition for extruding films having excellent stress relaxation and increased retained tension or load at elevated temperatures. The composition is comprised of

(a) 100 parts by weight of a mixture of two or more hydrogenated styrenic block copolymers (HSBC's) having at least two polystyrene end-blocks and a mid-block of a polymerized diene wherein at least 80 mol% of the residual unsaturation has been hydrogenated, wherein HSBC #1 has an apparent number average molecular weight between 35,000 and 90,000 and a polystyrene content between 15 and 40 percent by weight, wherein HSBC #2 has an apparent number average molecular weight between 95,000 and 150,000 and a polystyrene content between 15 and 40 percent by weight, wherein the ration w/w of HSBC #1 versus HSBC #2 is in the range of from 8:1 to 1:8,
(b) from 10 to 50 parts by weight per 100 parts by weight of polymer (phr) of a medium molecular weight polystyrene (2) or a mixture of a low molecular weight polystyrene (1) and a medium molecular weight polystyrene (2), wherein PS (1) has a molecular weight in the range of 500 to 4,000 and PS(2) has a molecular weight in the range of 20,000 to 150,000 and wherein PS(1) and PS(2) are used in a weight ratio of 1:5 to 5:1,
(c) from 3 to 50 phr of a filler, and
(d) from 30 to 70 phr of a softening agent, and wherein the composition has a modulus at 100% of no greater than 1.8 MPa, a tensile strength of at least 9 MPa, and a deformation resistance after 150 cycles in a hysteresis test of less than 15%.

## Mode(s) for Carrying Out the Invention

The extrudable elastomeric composition of the present invention is an improvement of the extrudable compositions described in United States Patents Nos. 4,970,259 and 5,093,422 and in WO 01/19919 mentioned above. The known compositions include one or more hydrogenated styrenic block copolymers, typically a polystyrene-poly(ethylene-butylene)-polystyrene (S-EB-S) or a polystyrene-poly(ethylene-propylene)-polystyrene (S-EP-S) elastomeric block copolymer which is produced by hydrogenating a polystyrene-polybutadiene-polystyrene or polystyrene-polyisoprene-polystyrene block copolymer. The extrudable compositions further comprise a polyolefin and a plasticizer, typically an extending oil.

The hydrogenated styrenic block copolymers have at least two polystyrene blocks, preferably separated by a hydrogenated block of polybutadiene (EB). The midblock is hydrogenated for at least 80 percent, preferably at least 90 percent of the residual double bonds.

Note that the endblocks and midblocks are defined as homopolymer blocks, but that they may be copolymer blocks comprising up to 5 wt% of comonomers. In fact, the midblock may comprise even higher levels of comonomers, provided the midblock remains elastomeric in nature (glass transition temperature below 0 degrees Centigrade).

The block copolymers in case of a butadiene-based block copolymer preferably have a vinyl content in the range of from 30 to 70 percent by weight (based on the midblock). The term "vinyl content" refers to the content of a conjugated diene that is polymerized via 1,2-addition in the case of butadiene or via 3,4-addition in case of isoprene. In case of an isoprene-based block copolymer, or in case of a butadiene/isoprene-based block copolymer, this vinyl content may be lower, extending from 5 percent up to 70 percent by weight.

Suitably, the HSBC #1 is a polystyrene-polyethylene-butylene-polystyrene tri-block copolymer with an apparent number average molecular weight between 35,000 and 90,000, preferably between 50,000 and 80,000 and a polystyrene content (PSC) of 15 to 40 percent by weight, preferably of 20 to 35 percent by weight. Suitably, the HSBC #2 is a polystyrene-polyethylene-butylene-polystyrene tri-block copolymer with an apparent number average molecular weight between 95,000 and 150,000, preferably between 100,000 and 135,000 and a polystyrene content (PSC) of 15 to 40 percent by weight, preferably of 20 to 35 percent by weight.

Both components need to be present, in a weight ratio of 1:8 to 8:1, preferably in a weight ratio of 1:3 to 3:1.

These polymers may be prepared using free-radical, cationic and anionic initiators or polymerization catalysts. Such polymers may be prepared using bulk, solution or emulsion techniques. In any case, the polymer containing at least ethylenic unsaturation will, generally, be recovered as a solid such as a crumb, a powder, a pellet, or the like.

These block copolymers may be made by sequential polymerization, but also by coupling di-block copolymers (which may, but need not be identical).

The styrenic block copolymers must be hydrogenated. In general, the hydrogenation or selective hydrogenation of the polymer may be accomplished using any of the several hydrogenation processes known in the prior art. For example the hydrogenation may be accomplished using methods such as those taught, for example, in US 3494942 ; US 3634549 ; US 3670054 ; US 3700633 and US RE27145E. The methods known in the prior art and useful in the present invention for hydrogenating polymers containing ethylenic unsaturation and for hydrogenating or selectively hydrogenating polymers containing aromatic and ethylenic unsaturation, involve the use of a suitable catalyst, particularly a catalyst or catalyst precursor comprising an iron group metal atom, particularly nickel or cobalt, and a suitable reducing agent such as an aluminium alkyl.

In general, the hydrogenation will be accomplished in a suitable solvent at a temperature within the range from 20 to 100 ˚C and at a hydrogen partial pressure within the range from 7 to 350 bar g, preferably 7 to 70 bar g. Catalyst concentrations within the range from 10 to 500 ppm (wt) of iron group metal based on total solution are generally used and contacting at hydrogenation conditions is generally continued for a period of time within the range from 60 to 240 minutes. After the hydrogenation is completed, the hydrogenation catalyst and catalyst residue will, generally, be separated from the polymer.

Suitable hydrogenated styrenic block copolymers useful as HSBC #1 and commercially available comprise Kraton® G1652, Tuftec™ H1041 and H1053, and some SEPS grades from Kuraray or Taiwan Synthetic Rubber company, whereas those useful as HSBC #2 and commercially available comprise Kraton G1650 and GRP6924 polymers, as well as various grades from Asahi, Kuraray and/or TSRC.

Of particular importance, from a property perspective and a cost perspective is the use of the medium molecular weight polystyrene (2) in combination with a filler. Moreover, surprisingly improved results are obtained if the PS(2) is replaced with a mixture of a low molecular weight polystyrene (1) and a medium molecular weight polystyrene (2). PS (1) has a molecular weight in the range of 500 to 4,000 and preferably in the range of 1,000 to 3,000. Suitable low molecular weight polystyrene grades include various Kristalex™ grades and F115 (MW = 2,030) in particular.

Likewise, PS(2) has a molecular weight in the range of 30,000 to 150,000 and preferably in the range of 100,000 to 150,000. Suitable polystyrene grades include various Empera™ grades and grade 156F (MW = 134,000) in particular. It also includes Piccolastic™ D125 (MW = 37,000). From a price perspective and availability, the Empera grade is preferred.

Preferably both components PS(1) and PS(2) are used in combination, in a weight ratio of 1:5 to 5:1, preferably in a weight ratio of 1:2 to 2:1.

Of similar relevance is the presence of a filler. Using the combination of PS(1) and PS(2) without the filler has been tried, but such compositions subsequently failed. Suitable fillers include calcium carbonates, talc, and silicas. These fillers are commercially available, for instance as Omyacarb™ 5-AV from. Omya.

Finally, it is rather common to add a plasticizer, in particular an oil. The amount of oil used in the claimed composition may range from 30 to 70 phr, in particular from 40 to 60 phr. The presence of a plasticizer aids in the processing of the final compound and helps reduce the amount of stress relaxation. Oils which can be used are those which are compatible with the elastomeric mid-block segment of the elastomeric block copolymer and which do not tend to go into the aromatic end-block portions to any significant degree. Thus, the oils can be viewed as paraffinic. Paraffinic oils which may be used in the elastomeric composition should be capable of being melt processed with other components of the elastomeric composition without degrading. Particularly important is the ability of the final composition to be melt extruded. An exemplary extending oil is a white mineral oil available under the trade designation Ondina™ 941 from Deutsche Shell GmbH. Ondina 941 has a specific gravity of 0.868 at 15 ˚C. Suitable vegetable oils and animal oils or their derivatives may also be used as the extending oil.

While the principal components of the extrudable elastomeric composition used to form the elastic sheet have been described in the foregoing, such extrudable elastomeric composition is not limited thereto, and can include other components not adversely affecting the extrudable elastomeric composition attaining the stated objectives. Exemplary materials which could be used as additional components would include, without limitation, pigments, antioxidants, stabilisers, surfactants, waxes, flow promoters, solvents, and materials added to enhance processability and pellet handling of the composition.

Requirements for elastic films:

Hysteresis set after 150 cycles ≤ 15%
Modulus at 100% ≤ 1.8 MPa, preferably ≤ 1.5 MPa
Tensile strength ≥ 9 MPa, preferably ≥ 10 MPa
Processable as a film.

Description of hysteresis experiment:

Sample dimensions: Strip of 12,7 mm X 125 mm cut from film (only MD possible with our cast films)

1.    Zwick tensile tester:
2.    Load cell                                         100 N
3.    Grip distance                                   50 mm
4.    Cycle speed                                    250 mm/min (both up and down)
5.    Pre-load length) = 0                          0.15N (this point is defined as starting point for
6.    Waiting time at 110% 0,1sec
7.    Measuring strength (= modulus) at 50%, 75%, 110%, 110%, 75% and 50%.
8.    The test was at 110% elongation to correct for the 10% set after 150 cycles.
9.    Set (in %) is defined as follows: sample's length after 150 cycles (l150) minus initial length of the sample (10) divided by initial length (10) times 100%

(continued)

$$Set\% = \frac{l_{150} - l_0}{l_0} \cdot 100$$

As used herein, the term "molecular weights" refers to the apparent molecular weight in g/mol of the polymer or block of the copolymer. The molecular weights referred to in this specification and claims can be measured with gel permeation chromatography (GPC) using polystyrene calibration standards, such as is done according to ASTM 3536. GPC is a well-known method wherein polymers are separated according to molecular size, the largest molecule eluting first. The chromatograph is calibrated using commercially available polystyrene molecular weight standards. The molecular weight of polymers measured using GPC so calibrated are styrene equivalent molecular weights or apparent molecular weights. For anionically polymerized linear polymers, the polymer is essentially monodispersed and it is both convenient and adequately descriptive to report the "peak" molecular weight of the narrow molecular weight distribution observed. The peak molecular weight is usually the molecular weight of the main species shown in the chromatograph. For materials to be used in the columns of the GPC, styrene-divinyl benzene gels or silica gels are commonly used and are excellent materials. Tetrahydrofuran is an excellent solvent for polymers of the type described herein. The detector used is preferably a combination ultraviolet and refractive index detector. All molecular weights are measured prior to hydrogenation which will increase the molecular weights by a small amount.

As used herein, the polystyrene content of a block copolymer refers to the %weight of polystyrene in the block copolymer. It is calculated by dividing the sum of molecular weight of all polystyrene blocks by the total molecular weight of the block copolymer.

The block copolymers used in the following examples are Kraton G1652, as HSBC #1, and G1650 as HSBC #2. All compositions (parts in parts by weight) were made on a twin-screw extruder, 25 mm UD40 from Berstorff. Filler was added via side feeder, oil was injected into the melt. The finished Composition was then cast into -0.1 mm thick films on a film caster with a cylinder diameter of 22 mm, L/D 21. The die temperature was 180 to 220˚C.

Comparative Example 1 (similar to WO 01/19919)

Composition 1 was made by pre-blending 60 pbw G1650, 40 pbw G1652, 45 pbw of Ondina 941 and 20 pbw of Piccolastic D125. Details of the composition are included in Table 1. The tensile properties and hysteresis properties of the cast film sample based on the Composition 1 were measured by the procedure described above. The results are shown in Table 2 below. The composition met the requirements concerning tensile properties, hysteresis properties, processability (although just) and modulus.

Example 2

Example 2 was prepared as described in Comparative Example 1 with the exception that 20 pbw Omyacarb was added. Again the details of the composition are included in Table 1. The film appearance of this composition improved, whereas this composition did meet the minimum tensile requirements. As can be seen from Table 2, the modulus was 1.7 MPa, which is more than the 1.5 MPa limit for the preferred embodiment.

Comparative Examples 3 and 4, and Example 5

Comparative Example 3 was prepared as described in Comparative Example 1 with the exception that Piccolastic D125 was replaced by 10 pbw Kristalex F115 and 10 pbw Empera 156F. This formulation could not be cast into a film. A composition with 20 pbw Empera 146 was made, again without filler and as a result film processing appeared impossible. On the other hand, Empera formulation with 5 pbw Omyacarb met the minimum requirements.

Examples 6-9 and Comparative Example 10

These experiments concern the preferred embodiment of the invention. Compositions were prepared, similar to Comparative Example 3 however with increasing amounts of Omyacarb. The details are included in Table 1. It can be seen that Examples 6-9 have adequate or good film appearance and good tensile properties in combination with hysteresis properties. On the other hand, Comparative Example 10 has too much filler, and thus fails in the modulus 100 %.

**Table 1**

| Composition | C1 | 2 | C3 | C4 | 5 | 6 | 7 | 8 | 9 | C10 |
|---|---|---|---|---|---|---|---|---|---|---|
| Kraton G1650 | 60 | 60 | 60 | 60 | 60 | 60 | 60 | 60 | 60 | 60 |
| Kraton G1652 | 40 | 40 | 40 | 40 | 40 | 40 | 40 | 40 | 40 | 40 |
| Piccolastic D125 | 20 | 20 | | | | | | | | |

(continued)

| Composition | C1 | 2 | C3 | C4 | 5 | 6 | 7 | 8 | 9 | C10 |
|---|---|---|---|---|---|---|---|---|---|---|
| Kristalex F115 | | | 10 | | | 10 | 10 | 10 | 10 | 10 |
| Empera 156F | | | 10 | 20 | 20 | 10 | 10 | 10 | 10 | 10 |
| Omyacarb 5AV | 0 | 20 | 0 | 0 | 5 | 5 | 10 | 20 | 30 | 60 |
| Oil | 45 | 45 | 45 | 45 | 45 | 45 | 45 | 45 | 45 | 45 |
| Antioxidant | 0.2 | 0.2 | 0.2 | 0.2 | 0.2 | 0.2 | 0.2 | 0.2 | 0.2 | 0.2 |

The results of the tensile property tests ($\geq$ 9 MPa, preferably $\geq$ 10 MPa); hysteresis set after 150 cycles ($\leq$15%); modulus at 100% ($\leq$ 1.8 MPa, preferably $\leq$ 1.5 MPa), and -importantly- processability to be cast as a film are shown in Table 2 below. If the film could not be cast, then the other properties were not determined ("ND").
**Table 2**

| Composi tion | C1 | 2 | C3 | C4 | 5 | 6 | 7 | 8 | 9 | C10 |
|---|---|---|---|---|---|---|---|---|---|---|
| Modulus 100% (MPa) | 1.5 | 1.7 | ND | ND | 1.7 | 1.5 | 1.5 | 1.5 | 1.5 | 1.9 |
| Hysteres is set (%) 150 cycles | 11.7 | 13.6 | ND | ND | 10 | 11.2 | 12.9 | 10.8 | 10.2 | 10.7 |
| Tensile Strength (MPa) | 18.3 | 13 | ND | ND | 9.2 | 15.4 | 12.4 | 11.1 | 10.2 | 9.0 |
| Process ability | 0 | + | - | - | + | + | + | + | + | + |

It can be seen that the compositions of Experiments 6 to 9 all pass the requirements and thus provide an alternative to the composition of Comparative Experiment C1. Surprisingly, the presence of filler resulted in a formulation that does meet the requirements. It would not have been obvious to expect these formulations to be successful, as compositions C3 and C4 clearly fell short of the requirements. Composition 5 is processable and interesting from a cost perspective. It meets the minimum requirements of tensile strength and modulus, but is not the preferred formulation. Comparative composition 10 is outside the scope of the present invention, as the content of filler is too great.

**References**

- WO 01/19919
- US 3494942
- US 3634549
- US 3670054
- US 3700633
- US RE27145E
- **Fact Sheet K0344**. KRATON® G-2832 polymer for film applications. Kraton Polymers, 2003.

**Claims**

1.   An elastic film grade thermoplastic polymer composition comprised of

(a) 100 parts by weight of a mixture of two or more hydrogenated styrenic block copolymers (HSBC's) having at least two polystyrene end-blocks and a mid-block of a polymerized diene wherein at least 80 mol% of the residual unsaturation has been hydrogenated, wherein HSBC #1 has an apparent number average molecular weight between 35,000 and 90,000 and a polystyrene content between 15 and 40 percent by weight, wherein HSBC #2 has an apparent number average molecular weight between 95,000 and 150,000 and a polystyrene content between 15 and 40 percent by weight, wherein the ratio w/w of HSBC #1 versus HSBC #2 is in the range of from 8:1 to 1:8.
(b) from 10 to 50 parts by weight per 100 parts by weight of polymer (phr) of a a medium molecular weight polystyrene (2) or a mixture of a low molecular weight polystyrene (1) and a medium molecular weight polystyrene (2), wherein PS (1) has a molecular weight in the range of 500 to 4,000 and PS(2) has a molecular weight in the range of 20,000 to 150,000 and wherein PS(1) and PS(2) are used in a weight ratio of 1:5 to 5:1,
(c) from 3 to 50 phr of a filler, and
(d) from 30 to 70 phr of a softening agent, and wherein

the composition has a modulus at 100% of no greater than 1.8 MPa, a tensile strength of at least 9 MPa, and a deformation resistance after 150 cycles in a hysteresis test of less than 15%.

2. The composition of claim 1, wherein HSBC #1 is a polystyrene-polyethylene-butylene-polystyrene tri-block copolymer with an apparent number average molecular weight between 35,000 and 90,000, preferably between 50,000 and 80,000 and a polystyrene content (PSC) of 15 to 40 percent by weight, preferably of 20 to 35 percent by weight.

3. The composition of claim 1 or 2, wherein HSBC #2 is a polystyrene-polyethylene-butylene-polystyrene tri-block copolymer with an apparent number average molecular weight between 95,000 and 150,000, preferably between 100,000 and 135,000 and a polystyrene content (PSC) of 15 to 40 percent by weight, preferably of 20 to 35 percent by weight.

4. The composition of any one of claims 1 to 3, wherein a mixture of PS(1) and PS(2) is used.

**Patentansprüche**

1. Thermoplastische Polymerzusammensetzung von elastischer Filmqualität, umfassend

(a) 100 Gewichtsteile einer Mischung aus zwei oder mehreren hydrierten Styrolblockcopolymeren (HSBC's) mit wenigstens zwei Polystyrolendblöcken und einem Mittelblock aus einem polymerisierten Dien, worin wenigstens 80 mol-% der restlichen Ungesättigtheit hydriert worden sind, worin das HSBC #1 ein scheinbares Molekulargewichtszahlenmittel zwischen 35.000 und 90.000 und einen Polystyrolgehalt zwischen 15 und 40 Gewichts-% aufweist, worin das HSBC #2 ein scheinbares anzahlgemitteltes Molekulargewicht zwischen 95.000 und 150.000 und einen Polystyrolgehalt zwischen 15 und 40 Gewichts-% aufweist, worin das Verhältnis w/w von HSBC #1 zu HSBC #2 im Bereich von 8:1 bis 1:8 liegt,
(b) 10 bis 50 Gewichtsteile auf 100 Gewichtsteile Polymer (phr) eines Polystyrols (2) mit mittlerem Molekulargewicht oder einer Mischung eines Polystyrols (1) mit niedrigem Molekulargewicht und eines Polystyrols (2) mit mittlerem Molekulargewicht, worin PS(1) ein Molekulargewicht im Bereich von 500 bis 4.000 und PS(2) ein Molekulargewicht im Bereich von 20.000 bis 150.000 aufweist und worin PS(1) und PS(2) in einem Gewichtsverhältnis von 1:5 bis 5:1 verwendet werden,
(c) 3 bis 50 phr eines Füllstoffs, und
(d) 30 bis 70 phr eines Weichmachers, und wobei die Zusammensetzung ein Modul bei 100 % von nicht mehr als 1,8 MPa, eine Zugfestigkeit von wenigstens 9 MPa und einen Verformungswiderstand nach 150 Zyklen in einem Hysteresetest von weniger als 15 % aufweist.

2. Zusammensetzung nach Anspruch 1, worin das HSBC #1 ein Polystyrol-Polyethylen-Butylen-Polystyrol-Triblockcopolymer mit einem scheinbaren Molekulargewichtszahlenmittel zwischen 35.000 und 90.000, vorzugsweise zwischen 50.000 und 80.000 und einem Polystyrolgehalt (PSC) von 15 bis 40 Gewichts-%, vorzugsweise von 20 bis 35 Gewichts-% ist.

3. Zusammensetzung nach Anspruch 1 oder 2, worin das HSBC #2 ein Polystyrol-Polyethylen-Butylen-Polystyrol-Triblockcopolymer mit einem scheinbaren Molekulargewichtszahlenmittel zwischen 95.000 und 150.000, vorzugsweise zwischen 100.000 und 135.000 und einem Polystyrolgehalt (PSC) von 15 bis 40 Gewichts-%, vorzugsweise von 20 bis 35 Gewichts-% ist.

4. Zusammensetzung nach einem der Ansprüche 1 bis 3, worin eine Mischung aus PS(1) und PS(2) verwendet wird.

**Revendications**

1. Composition de polymères thermoplastiques de qualité adaptée pour la formation d'un film élastique, composée de

(a) 100 parties en poids d'un mélange de deux ou plusieurs copolymères styréniques séquencés hydrogénés (HSBC) ayant au moins deux blocs terminaux de polystyrène et un bloc central d'un diène polymérisé dans lequel au moins 80 % en mole de l'insaturation résiduelle a été hydrogéné, dans lequel HSBC #1 a un poids moléculaire apparent moyen en nombre entre 35 000 et 90 000 et une teneur en polystyrène entre 15 et 40 pourcent en poids, dans lequel HSBC #2 a un poids moléculaire apparent moyen en nombre entre 95 000 et 150 000 et une teneur en polystyrène entre 15 et 40 pourcent en poids, dans lequel le rapport p/p de HSBC #1 par rapport à HSBC #2 est dans la plage de 8:1 à 1:8,

(b) de 10 à 50 parties en poids pour 100 parties en poids de polymère (phr) d'un polystyrène de poids moléculaire moyen (2) ou d'un mélange d'un polystyrène de faible poids moléculaire (1) et d'un polystyrène de poids moléculaire moyen (2), dans lequel PS(1) a un poids moléculaire dans la plage de 500 à 4 000 et PS(2) a un poids moléculaire dans la plage de 20 000 à 150 000, et dans lequel PS(1) et PS(2) sont utilisés dans un rapport de poids de 1:5 à 5:1,

(c) de 3 à 50 phr d'une charge, et

(d) de 30 à 70 phr d'un agent plastifiant, et dans lequel la composition a un module à 100 % non supérieur à 1,8 MPa, une résistance à la traction d'au moins 9 MPa, et une résistance à la déformation après 150 cycles lors d'un test d'hystérésis inférieure à 15 %.

2. Composition selon la revendication 1, dans laquelle HSBC #1 est un copolymère triséquencé de polystyrène-polyéthylène-butylène-polystyrène ayant un poids moléculaire apparent moyen en nombre entre 35 000 et 90 000, de préférence entre 50 000 et 80 000 et une teneur en polystyrène (PSC) de 15 à 40 pourcent en poids, de préférence de 20 à 35 pourcent en poids.

3. Composition selon la revendication 1 ou 2, dans laquelle HSBC #2 est un copolymère triséquencé de polystyrène-polyéthylène-butylène-polystyrène ayant un poids moléculaire apparent moyen en nombre entre 95 000 et 150 000, de préférence entre 100 000 et 135 000 et une teneur en polystyrène (PSC) de 15 à 40 pour-cent en poids, de préférence de 20 à 35 pour-cent en poids.

4. Composition selon l'une quelconque des revendications 1 à 3, dans laquelle un mélange de PS(1) et de PS(2) est utilisé.

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0119919 A
- US 20040220323 A
- US 20020001707 A
- US 4970259 A
- US 5093422 A
- US 3494942 A
- US 3634549 A
- US 3670054 A
- US 3700633 A
- US RE27145 E